# EUROPEAN PATENT APPLICATION

(11) **EP 1 560 138 A2**
(43) Date of publication of application: **03.08.2005**
(21) Application number: 04028766.6
(22) Date of filing: 03.12.2004
(51) Int. Cl.: G06F 17/60

(54) **Time management representations and automation for allocating time to projects and meetings within an online calendaring system**

(30) Priority: 28.01.2004 US 539815 P; 30.06.2004 US 882010
(71) Applicant: MICROSOFT CORPORATION, Redmond, WA 90852 (US)
(72) Inventor: Horvitz, Eric J., Redmond Washington 90852 (US)
(74) Representative: Grünecker, Kinkeldey, Stockmair & Schwanhäusser Anwaltssozietät

(57) **Abstract**

Systems and methods are provided for representing multiple tasks and their associated properties, including the time and nature of a deadline and preferences about the granularity of time for focusing on the task. This includes providing several services, including automated scheduling of project focus meetings with the owner of the system, reminders and tracking of time and resources used for the tasks, rescheduling of meetings given user input about putting off the task, and juggling and rescheduling appointments with other appointments as they come in, given the priority of the appointment. Methods are coupled with visualization and resource tracking tools, as well as such collaborative tools as multilevel, multi-view busy-free depending on those viewing the user's calendar. Resource tracking tools are harnessed for coalescing task-centric items and for providing appropriate files, documents, and other informational resources to users when users revisit a suspended task.

## Description

### RELATED APPLICATION

This application claims priority to U.S. Provisional Patent Application Serial No. 60/539,815 filed on, January 28, 2004 and entitled TIME MANAGEMENT REPRESENTATIONS AND AUTOMATION FOR SCHEDULING TASKS AND APPOINTMENTS WITHIN AN ONLINE CALENDARING SYSTEM A COMMUNITY OF USERS, the entire contents of which are herein incorporated by reference.

### TECHNICAL FIELD

The present invention relates generally to computer systems, and more particularly to a system and method that automatically determines a flexible pattern of allocations of time so that users can attend to tasks while adaptively adjusting project time allocations within a schedule to facilitate users reaching desired project goals.

### BACKGROUND OF THE INVENTION

A plurality of computer-related scheduling programs or computer-aided program managers are readily available from various vendors. Scheduling is deciding how to allocate one or more resources to accomplish particular activities over time so that input demands are met in a timely and cost-effective manner. Generally, this involves determining a set of activity start and end times, together with resource assignments, which satisfy all temporal constraints on activity execution, satisfy resource capacity constraints and optimize some set of performance objectives to the extent possible.

In general, there are common themes provided in many of today's scheduling programs. For instance, these programs help identify components used in project management, help identify desktop and program constraints, provide inputs for starting a new project, allow creating and modifying a calendar to help manage the project, allow entering, editing, and outlining tasks and milestones, allow sequencing of tasks using dependencies, allow setting and clearing task constraints, and enable such aspects as identifying a critical path. They also allow for other related activities such as compressing schedules, updating projects in progress, reporting variances from a plan, printing project information, viewing, sorting, grouping, and filtering project data, for example.

Other programs provide project schedulers with the tools necessary to plan and control projects with ease and success. This can include advanced project and resource modeling options for various situations that empower schedulers to create optimum project plans and quickly analyze the impact of changing resource limits, activity priorities and constraints on project end dates. Some programs provide step features to breakdown activities, respective features with weighted completion, % complete, and related instructions for completing the task. Steps are useful for reducing project size and informing resources of the work to be done to efficiently complete the task.

The above programs often provide easy-to-use analytical tools for different project scenarios. For example, schedulers can establish calendars at the global, project or resource level and track project activity duration down granular time frames such as to the minute level. These programs can control the level of detail required for reports and views by including notes, steps by activity, budgets, resource assignments and links to reference documents. Also, integrated risk management features enable project teams to identify, quantify and mitigate risks such as weather delays, late materials or other unforeseen details for sophisticated projects. Risks can be categorized and control plans can be documented as part of the overall project plan. Schedulers also help teams prepare for the unexpected through "what-if?" project and resource simulation engines to determine the schedule and cost exposure of project risks. Equipped with this information, project managers and schedulers can flag potential risks and take the necessary steps to plan an appropriate response strategy in advance.

One problem with current scheduling systems is that they are substantially rigid and do not promote schedule flexibility during the course of a project or task. For instance, intermediate deadlines often fall below the necessary attention of those managing the project. Also, these programs often require constant updating in order to keep respective scheduling information in an accurate, timely and up-to-date manner. These programs also do not provide necessary links for resource allocation and the effect on the resources when schedule activities change. More importantly, the notion of hard deadlines that are flagged as milestone dates appear do not support the flexibility required for actual project conditions.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention relates to systems and methods that facilitate dynamic scheduling and adjustment of time within the framework of an automated resource and task management system. A time management agent in conjunction with an adaptive scheduling component sets and adjusts flexible patterns of appointments for users to enable users to meet their end goals while completing desired tasks. Such patterns can be outlined on the user's calendar, for example, to provide visual queues for achieving various tasks or goals. This includes managing soft deadlines within a timeframe for completing a task and automatically moving time, re-scheduling time, and adjusting schedules/resources to facilitate completion of respective tasks in a timely manner. Also, the present invention introduces the concept of allowing users to selectively decide periods of down or free time versus busy periods dedicated to achieving the task. These periods can be adjusted and negotiated while re-scheduling and allocating other periods when conditions change. Also, depending on user preferences, some individuals or groups other than the user may view the user's calendar as busy while selected individuals or groups may view the user's calendar as free.

In one aspect of the present invention, systems and methods are provided for representing multiple tasks and their associated properties, including the time and nature of a deadline and preferences about the granularity of time for focusing on the task. This includes providing several services, including automated scheduling of project focus meetings with the owner of the system, reminders and tracking of time and resources used for the tasks, rescheduling of meetings given user input about putting off the task, and juggling and rescheduling appointments with other appointments as they come in, given the priority of the appointment. Methods are coupled with visualization and tracking tools, as well as such collaborative tools as multilevel, multi-view busy-free depending on those viewing the user's calendar. Other aspects include mining implicit queues for task resources, prompting users to complete soft milestones in order that hard deadlines are met, and employing preference tools for enabling users to craft desired system performance.

To the accomplishment of the foregoing and related ends, certain illustrative aspects of the invention are described herein in connection with the following description and the annexed drawings. These aspects are indicative of various ways in which the invention may be practiced, all of which are intended to be covered by the present invention. Other advantages and novel features of the invention may become apparent from the following detailed description of the invention when considered in conjunction with the drawings.

### BRIEF DESCRIPTION OF THE DRAWINGS

Fig. 1 is a schematic block diagram of a time management system in accordance with an aspect of the present invention.
Fig. 2 is a diagram of a user interface for marking an item in accordance with an aspect of the present invention.
Figs. 3 and 4 illustrate example project interfaces in accordance with an aspect of the present invention.
Figs. 5 and 6 illustrate example multi-status review interfaces in accordance with an aspect of the present invention.
Fig. 7 illustrates current day's planning page in accordance with an aspect of the present invention.
Fig. 8 illustrates a calendar view for global status of activities over time in accordance with an aspect of the present invention.
Figs. 9 and 10 illustrate tools for manual or mix of initiatives at scheduling in accordance with an aspect of the present invention.
Figs. 11-13 illustrate multi-level privacy and sharing aspects of calendar information in accordance with an aspect of the present invention.
Figs. 14-16 illustrate how reminders and feedback can be employed to manage time and resources in accordance with an aspect of the present invention.
Fig. 17 is a flow diagram illustrating an automated scheduling process in accordance with an aspect of the present invention.
Fig. 18 is a schematic block diagram illustrating a suitable operating environment in accordance with an aspect of the present invention.
Fig. 19 is a schematic block diagram of a sample-computing environment with which the present invention can interact.

### DETAILED DESCRIPTION OF THE INVENTION

The present invention relates to a system and methodology that provides automated time management and dynamic scheduling within selected periods of time. This includes automated management of priorities and resources to help users achieve desired goals. In one aspect, a time management system is provided. The system includes a scheduling component to dynamically allocate time within periods associated with completion of a task. A time agent cooperates with the scheduling component to present patterns of time for a user in order to facilitate completion of the task.

As used in this application, the terms "component," "agent," "scheduler," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components may communicate *via* local and/or remote processes such as in accordance with a signal having one or more data packets (*e.g.*, data from one component interacting with another component in a local system, distributed system, and/or across a network such as the Internet with other systems *via* the signal).

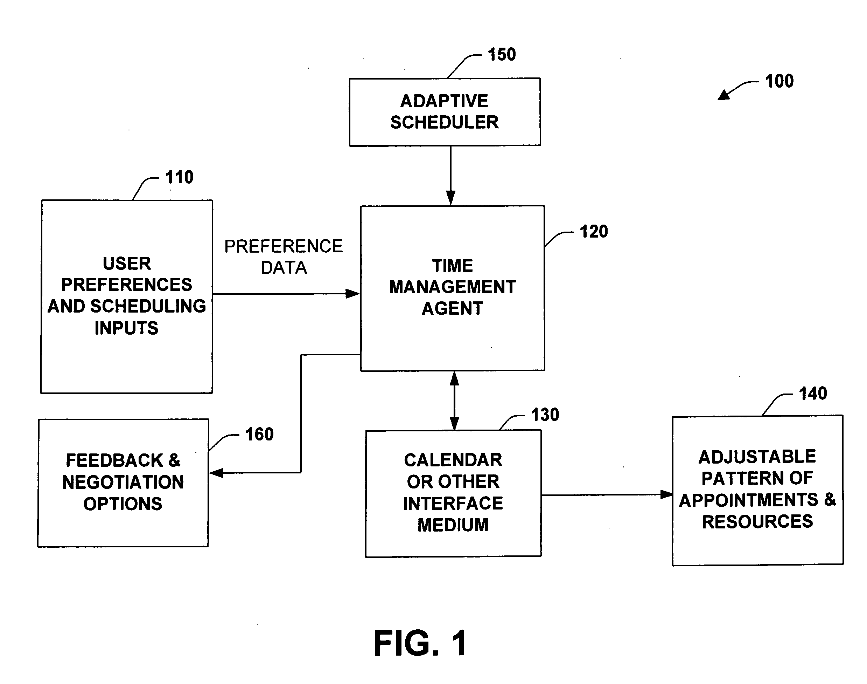

Referring initially to Fig. 1, a time management system 100 is illustrated in accordance with an aspect of the present invention. The system 100 includes a preferences tool 110 for receiving user preference data with respect to time allocations, scheduling information, and how such information should be applied and/or exposed to other users or groups. The preference data is processed by a time management agent 120 (also referred to as an agent) and retrieves scheduling information relating to the user from an electronic calendar 130. Based on the preferences and scheduling data provided by the calendar 130, the agent 120 outputs adjustable patterns of appointments to the user at 140 in order to coach or help the user meet desired goals. It is noted that the patterns of appointment 140 can include other aspects such as resource availability for completing a task and can appear as part of the calendar 130 or directed to substantially any output device such as a cell phone, display, remote/local system, or alternative user interface.

The patterns 140 can be dynamically adjusted by an adaptive scheduling component 150 that alters or changes time allocations with respect to scheduling decisions made by the user. For instance, a reminder can be generated by the agent 120 that a soft deadline or task is to begin in the near future. This reminder can be directed to the user as feedback 160 or as part of an electronic negotiation, whereby the user decides to complete the task or postpone the task to a later time. If a postponement decision were made, the adaptive scheduler 150 can re-allocate the users schedule while fitting in the postponed task at a later time and readjusting/reprioritizing other tasks. It is noted, that in addition to the calendar inputs 130, that the agent 120 can process information from substantially any source relating to activities of the user. For example, this can include other program inputs such as from a commercially available project management system.

The system 100 moves beyond the standard notion of merely flagging users at specific deadlines by dynamically adjusting time and resources while promoting flexible options for completing tasks. Thus, a lightweight approach is provided for implementation including layering functionality with core concepts of managing time and resources. Some basic functional aspects which are described in more detail below include: defining a project with name, given a deadline - processing/analyzing preferences about time between completion and deadline, estimating time required, chunking pattern preferences, and so forth, providing defaults for scheduling, rescheduling, and pushing out lower-priority meetings and projects. Other aspects include tools for tracking resources (manual, automatic, semi-automatic), adjustable policies for reminding, methods for reinstalling context (*e.g*., resources) and providing policy for handling a given context: e.g., assigning low, med, high interruptability properties (*e.g*., hold all calls, alerts, & email, except for people involved with project).

With respect to resource allocation, tools are provided at project initial definition and updated in-stream to allow for specification or confirmation of resources useful for projects (*e.g*., relevant / touched documents, sites, people, and so forth). These tools also provide access to tasks, (*e.g*., structured or semi-structured (*e.g*., grouped, list by mru per usage) when task is scheduled to be attended to or called up by user at other time. Other resource features include automated sensing and compilation of documents, sites, and other resources used during tasks. An automatic scheduler can be made aware of task start and stop periods and employ confirmation or feedback to ensure a task was focus. This can include checking at the end or during respective time segments if questions were answered, or other procedures were performed during segment or that resources touched would be useful to the task―and automatically bring the respective resources back at a later point, per MRU, and so forth.

It is noted that resource tracking tools can be provided that are harnessed for coalescing task-centric items and providing appropriate files, documents, and other informational resources to users when they revisit a suspended task. Also, the subject invention can be provided as a "time management platform" having well-developed interfaces, allowing third parties with expertise to develop plug in modules for time-management. For example, a time-management-tools development system can be employed whereby users a provided with a set of tools such as a visual interface for allowing entry and design of a project, task, or other activity that may require time management techniques to be applied to achieve desired goals. This can include entry of milestones, dates, times, activities and so forth along with configurations for generations of reminders to ensure task completion.

In one specific example of these tools, formal optimization of the allocation of resources under constraints can be employed in components to manage activities. These methods can include optimization algorithms such as linear and non-linear programming techniques, and other resource allocation methods. Commercial tools can be employed as plug-in modules to the platform such as a time-management module offered by third parties, other commercial offerings, web-based software, or substantially any time management offering that augments or supports the time management concepts described herein.

Moreover, time management functions and calculations can be associated with electronic reminder systems, including systems designed to remind more in cases where a user is likely to forget to complete a task, or has shown a deadline overrun at other times. Statistical methods and models can also be employed to learn about these cases (e.g., Bayesian methods). Statistical modeling can also be employed to determine where a user is having problems and to provide feedback at task set up time (e.g., an automated message saying "This is the estimated time you should allocate," or "Should I make a guess at how much time you will need," or during a task―"You'll likely need more time, or as an overall coach―let's sit down to see what is not working well for you, I've noticed that... Other automated time management operations can include recognizing tasks directly in email or other electronic storage. This can include employment of Natural Language Processors and text classifiers to facilitate determination and processing of tasks. Automatically determined tasks can be entered into the system automatically or a feedback dialog can be provided to the user to determine or query the user if a task has been determined correctly.

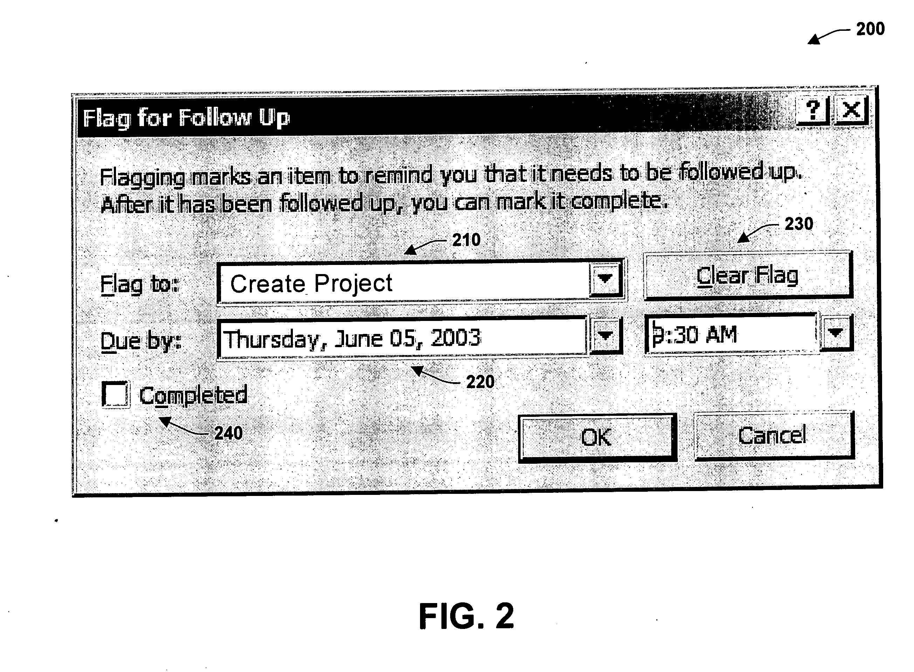

Before proceeding, Figs. 2-16 include example user interfaces that can be employed in accordance with the present invention. It is to be appreciated however, that these interfaces can be implemented in substantially any manner for displaying, inputting, and controlling the automated time management concepts described herein. Thus, these interfaces may include a display having one or more display objects including such aspects as configurable icons, buttons, sliders, input boxes, selection options, menus, tabs and so forth having multiple configurable dimensions, shapes, colors, text, data and sounds to facilitate operations with the system 100. In addition, the interface can also include a plurality of other inputs or controls for adjusting and configuring one or more aspects of the present invention and as will be described in more detail below. This can include receiving user commands from a mouse, keyboard, speech input, web site, remote web service and/or other device such as a camera or video input to affect or modify operations of the interface or other aspects of the system 100.

Referring now to Fig. 2, an interface 200 for marking an item is illustrated in accordance with an aspect of the present invention. The interface 200 can be used to allow users to set flags that mark items relating to a project that the respective item needs to be followed up. The interface includes an input 210 for the item to be flagged, a due date indication at 220, and a clear flag and time input at 230. After the item has been followed-up on or completed as a result of automated reminders being presented to the user (or before), the user can mark the activity as completed at 240.

Before proceeding, the tools described herein facilitate various aspects for dynamic time management and scheduling. Some of these aspects include:
- Automation based on chunking preferences, determining buffer time to complete before a deadline;
- Hard versus soft deadlines distinguished
- Laying down pattern of appointments on a calendar and allowing users to modify the patterns;
- Reminding users in real time and having users confirm (at time near end of a determined time slot or later) that time was focused on project, skipped, or only partly used on project;
   - Displaying hours remaining at these times (and others), and allowing for re-estimation at any turn, "given how it's going;" and/or
- Rescheduling if skipped or partially used time, or need more or less allocated time per estimates about time required were too low or high.

These aspects also can include:•Considering basic defaults, preferences that would enable a basic service;
- Considering key views, forms such as:
   - Project creation
   - Project time scheduling, review and manipulation
   - Project status lists, overviews
   - Daily, Weekly, Monthly overviews per "project canvas" and/or
   - Automated Reminders.

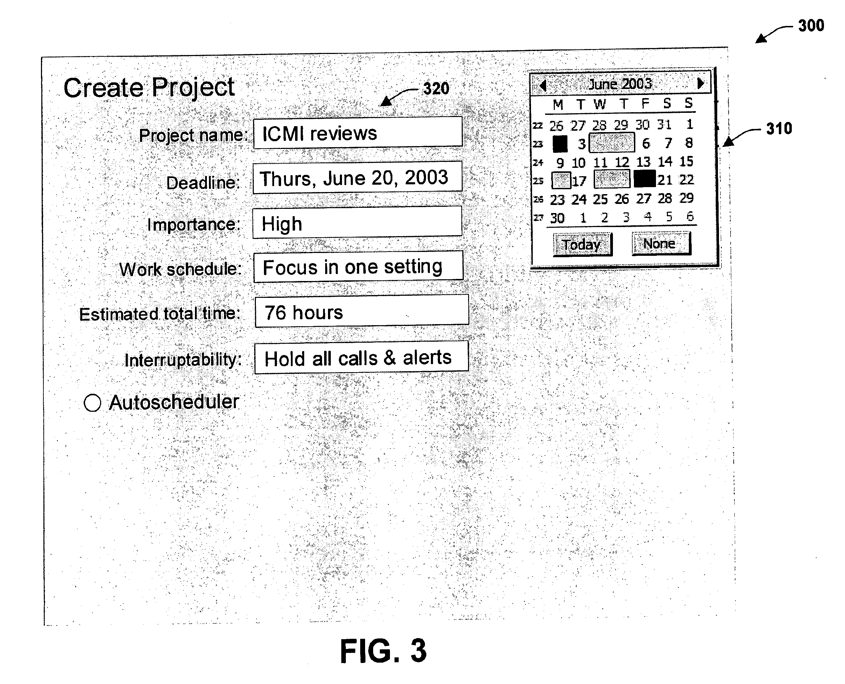

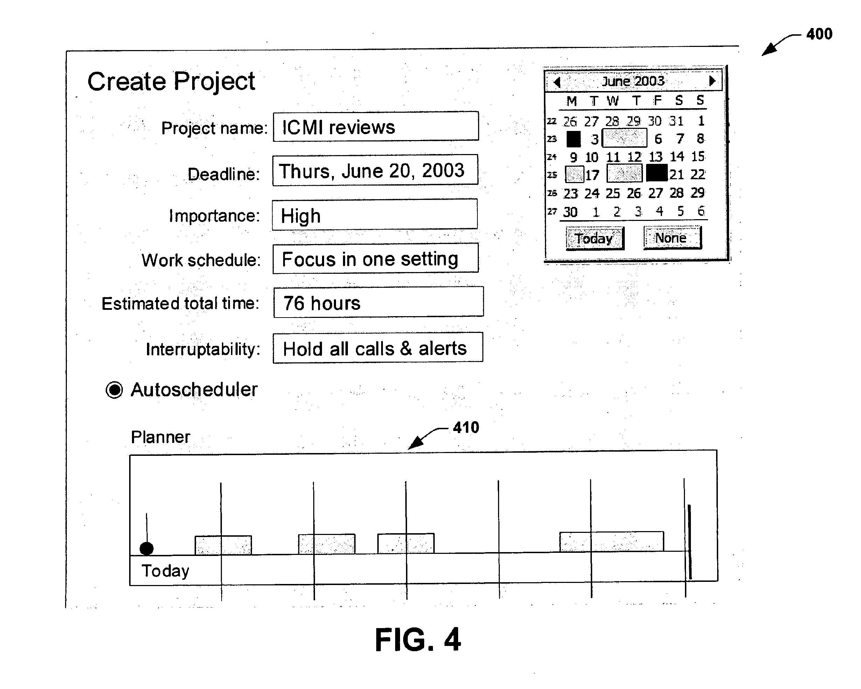

Turning to Figs. 3 and 4, example project interfaces are illustrated in accordance with an aspect of the present invention. Fig. 3 depicts a project creation and status page 300 having an associated calendar 310 that projects time allocations for the user to complete a desired task. The page 300 includes inputs 320 for entering project names, deadlines (hard or soft), importance (e.g., low, medium, high), type of work schedule (e.g., focus in one setting), estimated time for completion, interruptibility status while working on the project (e.g., hold all calls and alerts), and a selection for automatically scheduling the project. Fig. 4 illustrates in interface 400 that provides a planner pane 410 depicting segments of time that are allocated when automatic scheduling is selected.

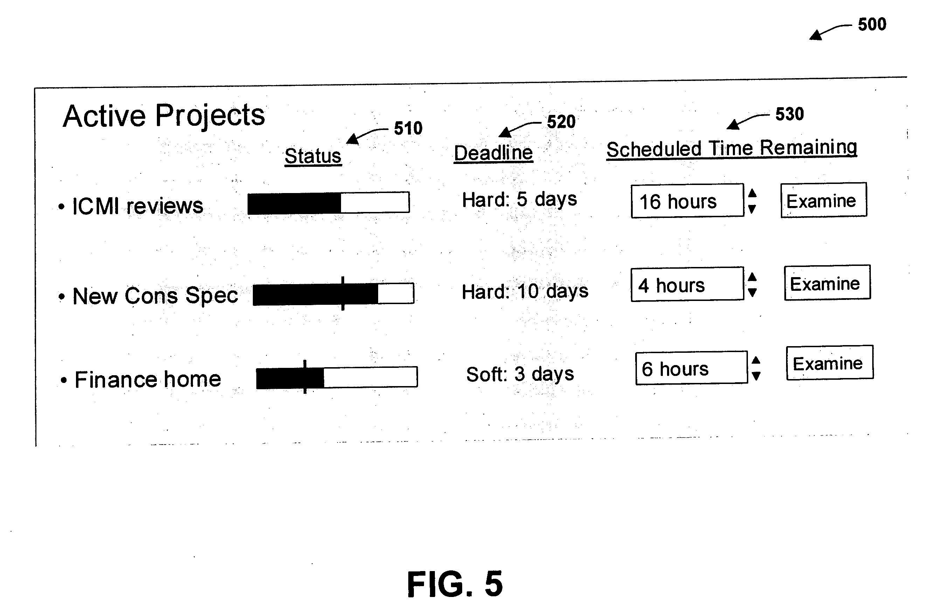

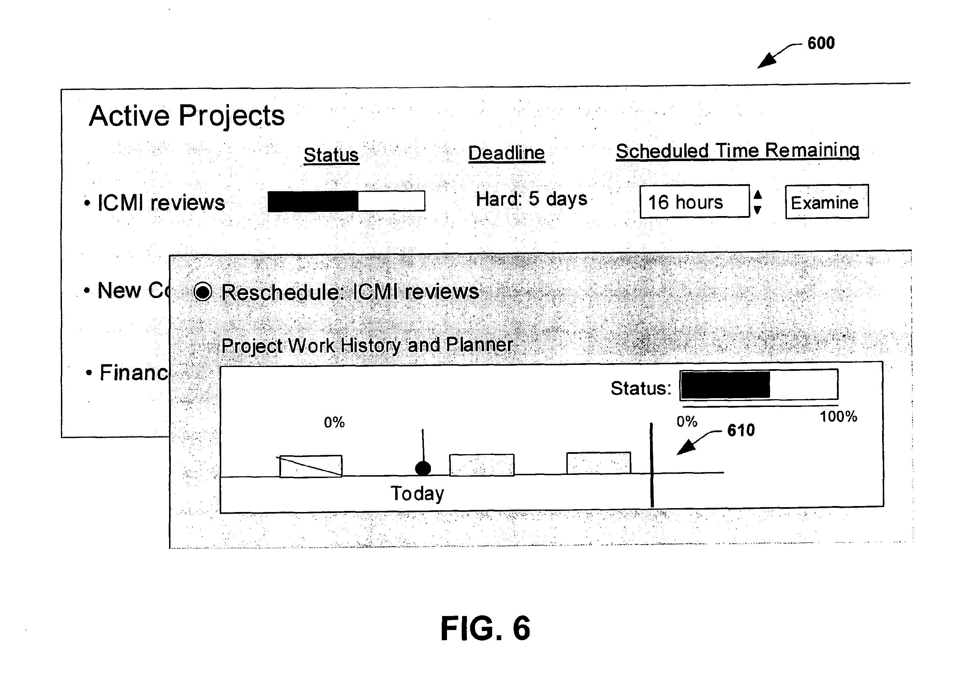

Figs. 5 and 6 illustrate multi-status review interfaces in accordance with an aspect of the present invention. Fig. 5 displays an active project status and overview page 500. This page includes status for multiple projects at 510, deadline status at 520, and scheduled time remaining for project or task completion at 530. Fig. 6 displays a planner page 600 that is presented if a project is re-scheduled. Such page can illustrate where the user is with respect to completing the project status for re-scheduled chunks of time still yet to be completed at 610.

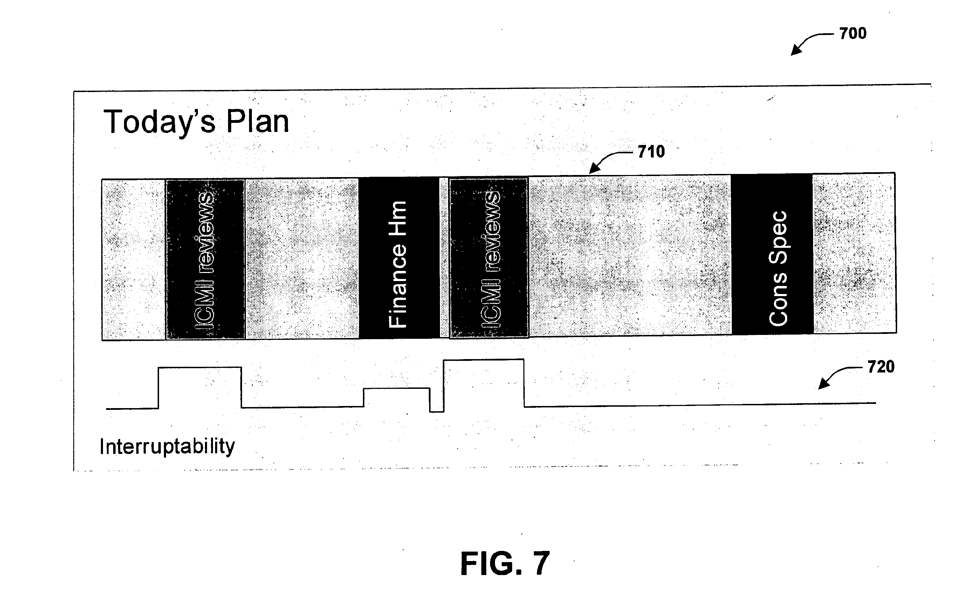

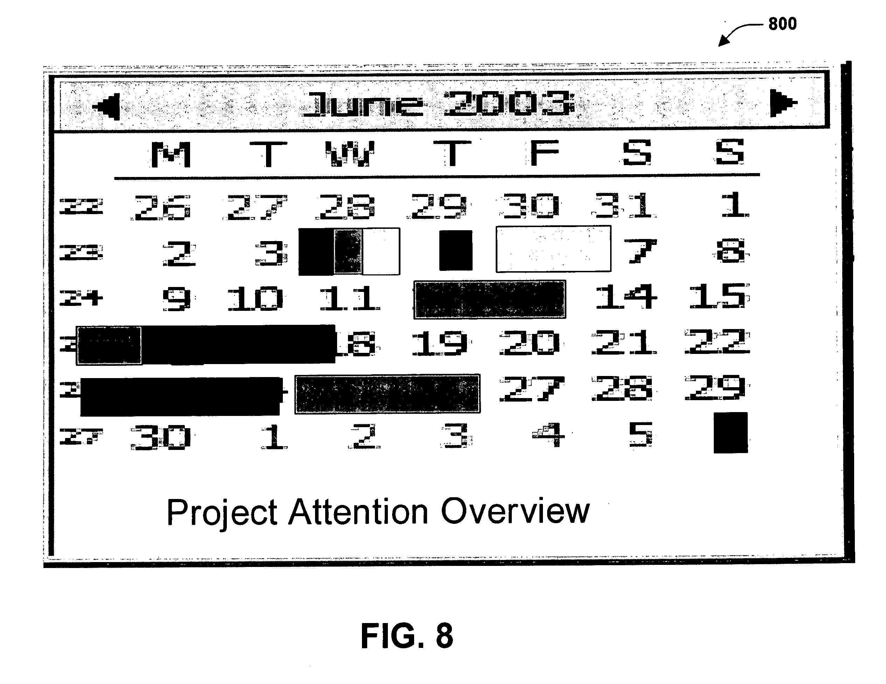

Fig. 7 illustrates a graphical display 700 of a current day's time allocation in accordance with an aspect of the present invention. In this aspect, various projects are laid out over time to that a user can grasp the activities planned for a given day at 710. As illustrated, such activities can be labeled with various colors and text. A status bar at 720 can be provided to indicate the severity of interruptions that are allowed for a given task. In contrast to the daily view of activity in 700, Fig. 8 depicts a calendar view 800 which provides a more global overview of task activities over time that are on the user's focus of attention.

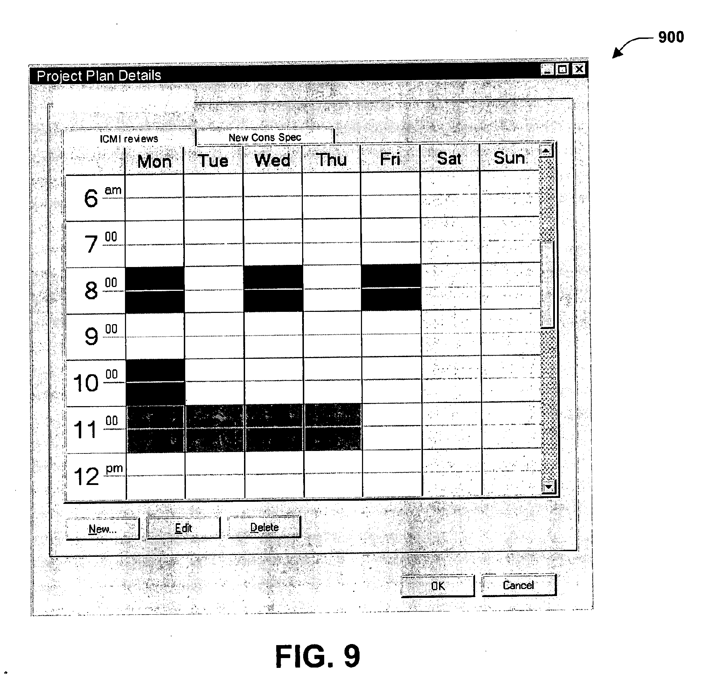

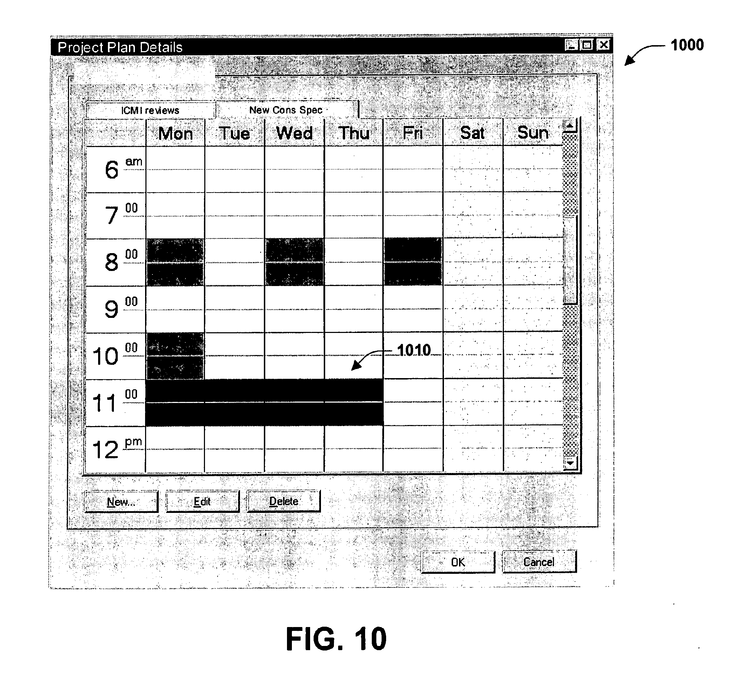

Figs. 9 and 10 illustrate tools for manual or mix of initiatives at scheduling in accordance with an aspect of the present invention. For example, Fig. 9 is a page 900 that displays time segments during the week dedicated for particular tasks. These type displays may be automatically provided to cause users to allocate time or priority for a particular task (*e.g.*, user prompted to schedule 10 more hours for a proposal before June). Fig. 10 illustrates a page 1000 where the user has re-prioritized a task at 1010 in response to scheduling information provided in the display 900.

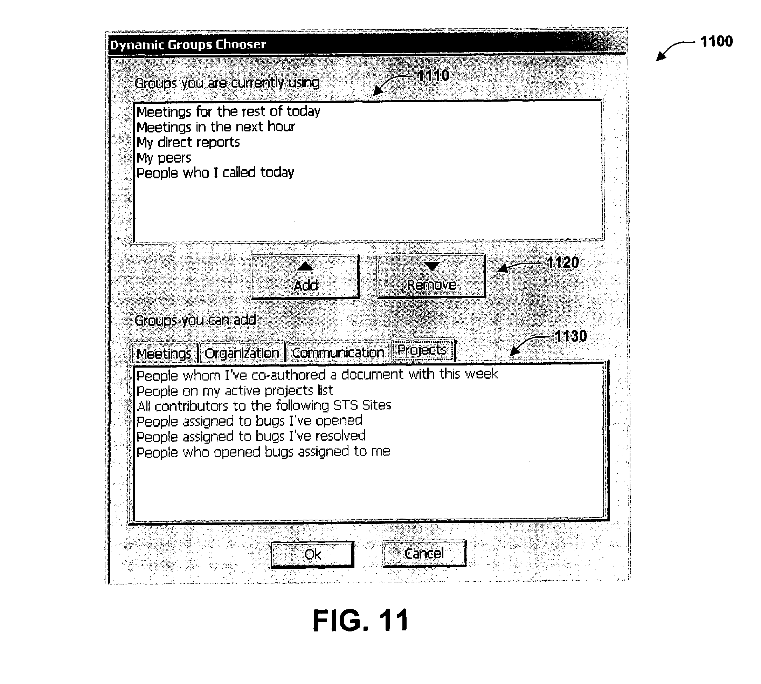

Figs. 11 through 13 illustrate multi-level privacy and sharing aspects of calendar information in accordance with an aspect of the present invention. This can include use of automated communication systems that tag and send information between users based on communications preferences. These systems include employment of dynamic and organizational groups to specify access to different amounts of calendar information (e.g., just busy, versus meeting title). This can also include use of dynamic and organizational groups to change a user's busy versus free status on a shared calendar based on attributes of the person viewing the user's calendar (per projects, relationships, and so forth).

Fig. 11 illustrates an interface 1100 for defining groups and relationships for users for sharing potential status. At 1110, current groups are defined such as meetings for the rest of the day, meetings in the next hour, direct reports, peers, people that were called today, and so forth. Input options for adding or removing groups is provided at 1120. At 1130, other group relationships can be defined for meetings, organizational relationships, communication relationships, and project relationships. This can include dynamic relationships such as people who have co-authored a document, or on an active project, or contributors to a site, or people assigned to bug problems opened and a plurality of other relationships that may occur between people.

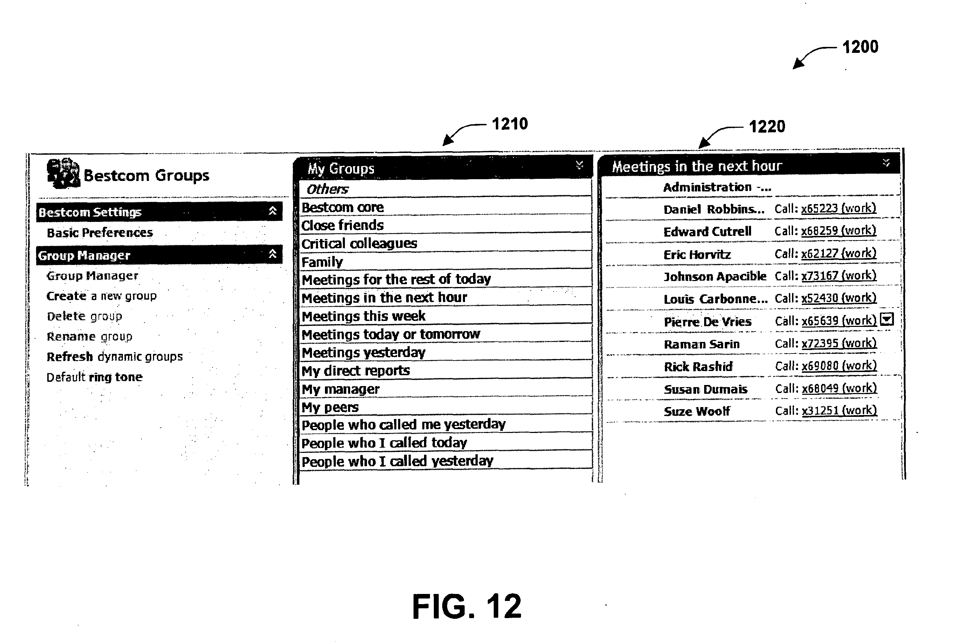

Fig. 12 depicts an interface 1200 for defining other groups, preferences, and relationships. At 1210, groups can be defined as close friends, critical colleagues, family, my manger, my peers and so forth or the groups can be dynamically defined such as those individuals I am meeting today or in the next hour. for example, the display at 1220 lists people that are to be met within the next hour.

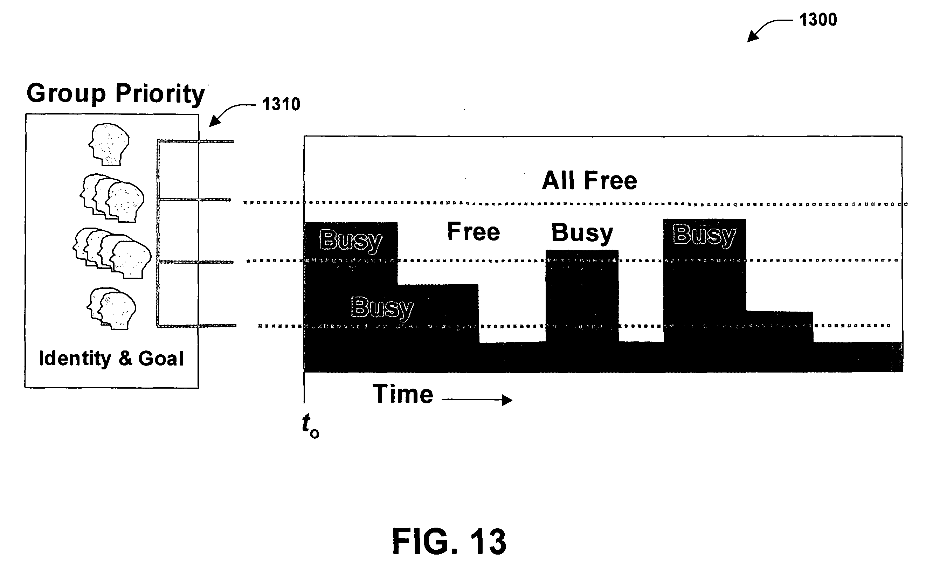

Fig. 13 is a display 1300 that illustrates how a user's status can be selectively shared with individuals from the aforementioned groups. For example, an individual or group defined at the top of a priority list 1310 is shown electronically that the user is free over the course of a selected time period, whereas users lower in the priority list are selectively shown alternative periods of busy and free over time.

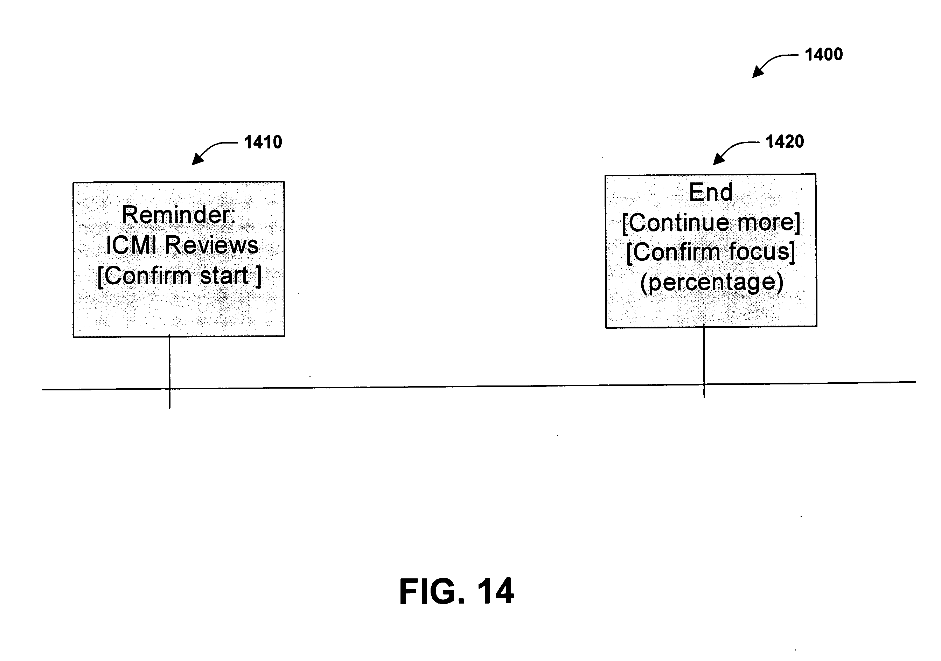

Figs. 14-16 illustrate how reminders and feedback can be employed to manage time and resources in accordance with an aspect of the present invention. These aspects include:
- Tracking;
- Reminders;
- Feedback;
- Adding documents for auto-track, coupled with availability when task or project revisited;
- Preference assessment about projects and interruptions (general default set up, custom projects, and so forth);
   - Deadline types, time before deadline ("predeadline" preferences")
   - Set up time
   - Time preferred between focused sessions for catch up, and so forth.
   - Travel time
   - Handling moving of lower priority project sessions, meetings to future to reschedule or schedule higher-priority projects among other aspects.

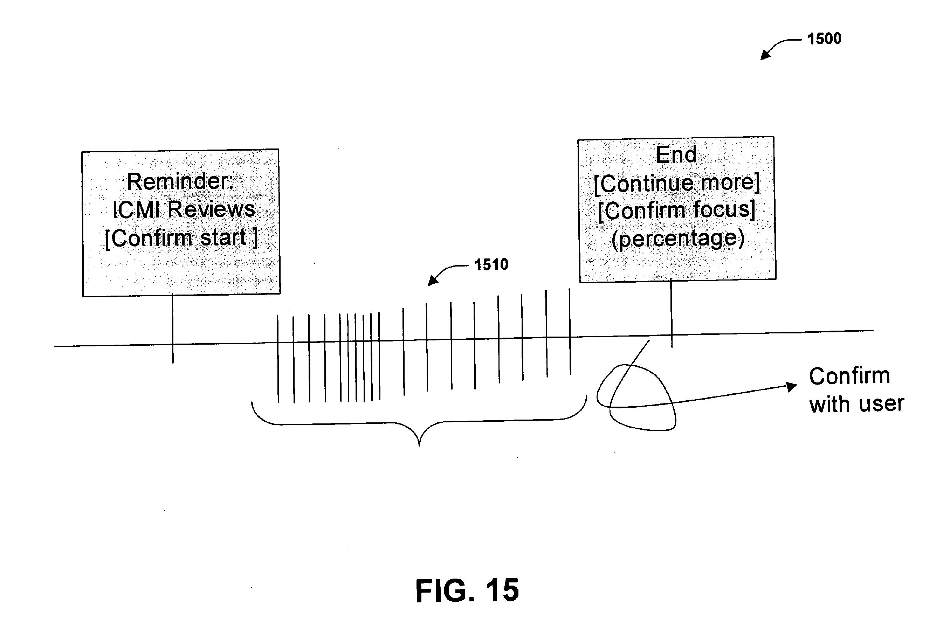

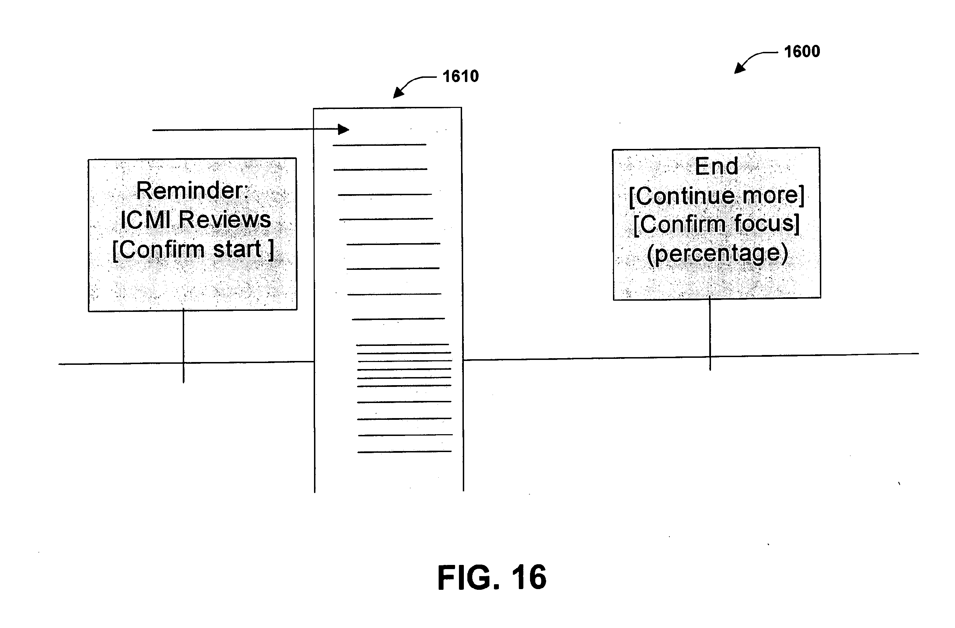

Fig. 14 is a display 1400 depicting reminders and borders of project centric focus sessions. The display employs user interactions to denote boundaries. At 1410, a reminder is generated asking for a confirmation on a task start time. At 1420, an ending palate or border is defined for a task based upon previous user selections. Fig. 15 depicts a similar display 1500 presenting available resources for the task which are tracked at 1510 and potentially made available at a future start time if so desired. Fig. 16 depicts a display 1600 that shows resources being made available at the next re-visitation of the project or task at 1610.

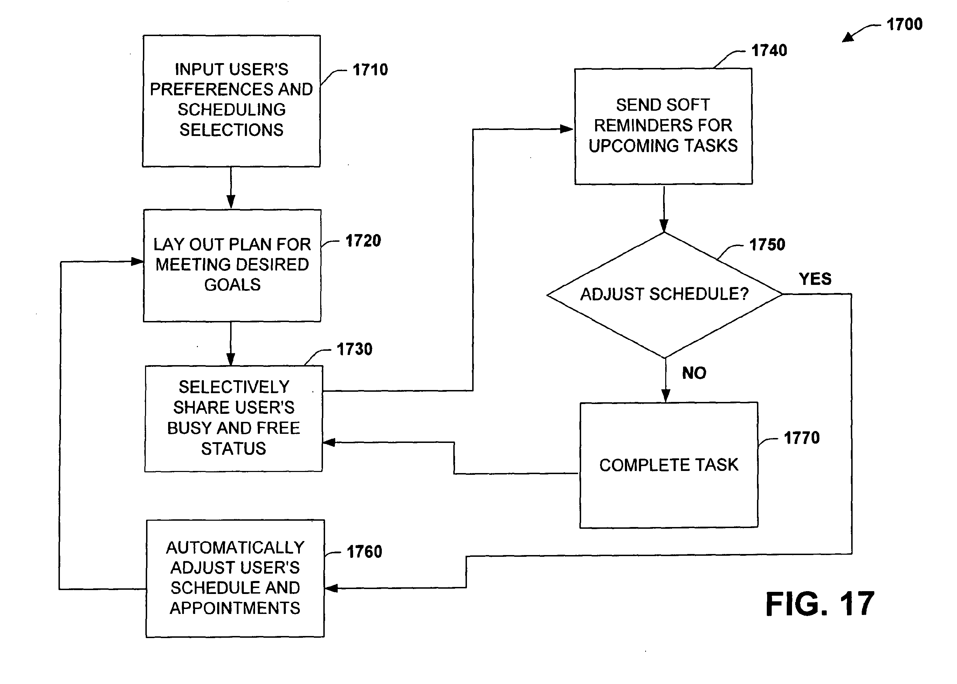

Fig. 17 is a flow diagram illustrating an automated scheduling process 1700 in accordance with an aspect of the present invention. While, for purposes of simplicity of explanation, the methodology is shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

Proceeding to 1710, user preferences and scheduling selections are processed in order to define a desired task or project. At 1720, a plan is automatically laid out for the user mapping time chunks for completing the desired task or project. As noted above, such plan can be provided in accordance with various user interfaces and/or mapped on to the user's calendar. At 1730, the user's busy and free status is selectively shared with other users or groups. As noted above, according to the user's preferences certain groups or individuals can be marked or tagged according to varying statuses. Thus, one group or individual may be shown the status of busy even though another group or user is shown the user's status as free. In this manner, the user can coordinate and prioritize time and activities based upon the user's relationship with a given individual. For instance, the user's supervisor may be given the user's actual status of free, whereas during the same time the user's subordinate may be given the status of busy in order to provide the user with additional free time to complete other activities or tasks. As can be appreciated, busy and free status provided to other individuals or groups can dynamically change over time according to calendar activities, project status, task completions, and so forth.

At 1740, automated reminders are sent to the users during various intervals of a task in order to facilitate orderly completion of the task. At 1750, the user can make a decision as to whether to complete the task based upon the reminder. If the user decides to reschedule the task, the process proceeds to 1760 and automatically readjusts the user's schedule and appoint while re-scheduling the delayed task. The process then proceeds back to 1720 and lays out an alternative scheduling plan for the user. If at 1760 the user allocates time for the task, the process proceeds to 1770 where the task is completed (or partially completed). If the task is only partially completed, automated reminding software is re-adjusted accordingly. If the task is completed at 1770, the process proceeds back to 1730 where the users busy and free status is selectively shared.

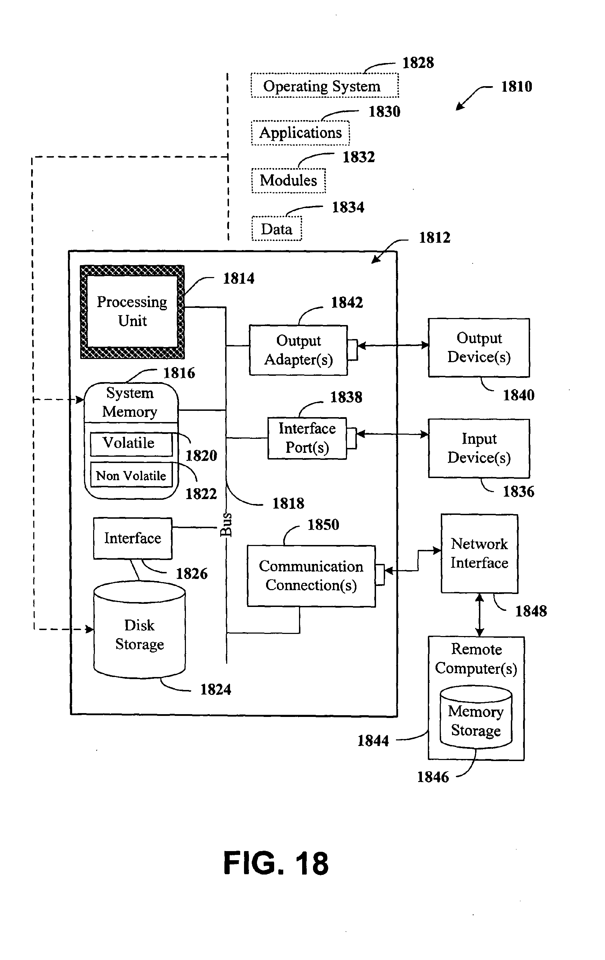

With reference to Fig. 18, an exemplary environment 1810 for implementing various aspects of the invention includes a computer 1812. The computer 1812 includes a processing unit 1814, a system memory 1816, and a system bus 1818. The system bus 1818 couples system components including, but not limited to, the system memory 1816 to the processing unit 1814. The processing unit 1814 can be any of various available processors. Dual microprocessors and other multiprocessor architectures also can be employed as the processing unit 1814.

The system bus 1818 can be any of several types of bus structure(s) including the memory bus or memory controller, a peripheral bus or external bus, and/or a local bus using any variety of available bus architectures including, but not limited to, 16-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1816 includes volatile memory 1820 and nonvolatile memory 1822. The basic input/output system (BIOS), containing the basic routines to transfer information between elements within the computer 1812, such as during start-up, is stored in nonvolatile memory 1822. By way of illustration, and not limitation, nonvolatile memory 1822 can include read only memory (ROM), programmable ROM (PROM), electrically programmable ROM (EPROM), electrically erasable ROM (EEPROM), or flash memory. Volatile memory 1820 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1812 also includes removable/non-removable, volatile/non-volatile computer storage media. Fig. 18 illustrates, for example a disk storage 1824. Disk storage 1824 includes, but is not limited to, devices like a magnetic disk drive, floppy disk drive, tape drive, Jaz drive, Zip drive, LS-100 drive, flash memory card, or memory stick. In addition, disk storage 1824 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1824 to the system bus 1818, a removable or non-removable interface is typically used such as interface 1826.

It is to be appreciated that Fig. 18 describes software that acts as an intermediary between users and the basic computer resources described in suitable operating environment 1810. Such software includes an operating system 1828. Operating system 1828, which can be stored on disk storage 1824, acts to control and allocate resources of the computer system 1812. System applications 1830 take advantage of the management of resources by operating system 1828 through program modules 1832 and program data 1834 stored either in system memory 1816 or on disk storage 1824. It is to be appreciated that the present invention can be implemented with various operating systems or combinations of operating systems.

A user enters commands or information into the computer 1812 through input device(s) 1836. Input devices 1836 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1814 through the system bus 1818 *via* interface port(s) 1838. Interface port(s) 1838 include, for example, a serial port, a parallel port, a game port, and a universal serial bus (USB). Output device(s) 1840 use some of the same type of ports as input device(s) 1836. Thus, for example, a USB port may be used to provide input to computer 1812, and to output information from computer 1812 to an output device 1840. Output adapter 1842 is provided to illustrate that there are some output devices 1840 like monitors, speakers, and printers, among other output devices 1840, that require special adapters. The output adapters 1842 include, by way of illustration and not limitation, video and sound cards that provide a means of connection between the output device 1840 and the system bus 1818. It should be noted that other devices and/or systems of devices provide both input and output capabilities such as remote computer(s) 1844.

Computer 1812 can operate in a networked environment using logical connections to one or more remote computers, such as remote computer(s) 1844. The remote computer(s) 1844 can be a personal computer, a server, a router, a network PC, a workstation, a microprocessor based appliance, a peer device or other common network node and the like, and typically includes many or all of the elements described relative to computer 1812. For purposes of brevity, only a memory storage device 1846 is illustrated with remote computer(s) 1844. Remote computer(s) 1844 is logically connected to computer 1812 through a network interface 1848 and then physically connected *via* communication connection 1850. Network interface 1848 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1850 refers to the hardware/software employed to connect the network interface 1848 to the bus 1818. While communication connection 1850 is shown for illustrative clarity inside computer 1812, it can also be external to computer 1812. The hardware/software necessary for connection to the network interface 1848 includes, for exemplary purposes only, internal and external technologies such as, modems including regular telephone grade modems, cable modems and DSL modems, ISDN adapters, and Ethernet cards.

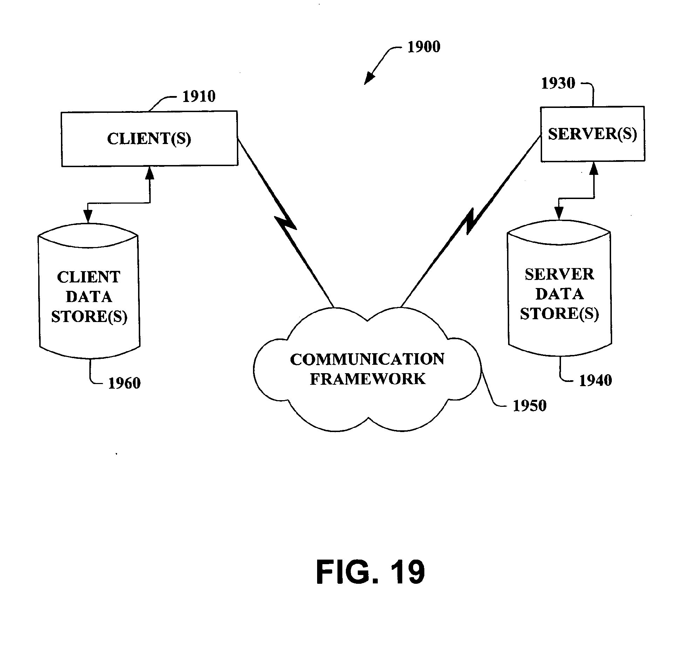

Fig. 19 is a schematic block diagram of a sample-computing environment 1900 with which the present invention can interact. The system 1900 includes one or more client(s) 1910. The client(s) 1910 can be hardware and/or software (e.g., threads, processes, computing devices). The system 1900 also includes one or more server(s) 1930. The server(s) 1930 can also be hardware and/or software (e.g., threads, processes, computing devices). The servers 1930 can house threads to perform transformations by employing the present invention, for example. One possible communication between a client 1910 and a server 1930 may be in the form of a data packet adapted to be transmitted between two or more computer processes. The system 1900 includes a communication framework 1950 that can be employed to facilitate communications between the client(s) 1910 and the server(s) 1930. The client(s) 1910 are operably connected to one or more client data store(s) 1960 that can be employed to store information local to the client(s) 1910. Similarly, the server(s) 1930 are operably connected to one or more server data store(s) 1940 that can be employed to store information local to the servers 1930.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A time management system, comprising:
a scheduling component to dynamically allocate time within periods associated with completion of a task; and
a time agent that cooperates with the scheduling component to present patterns of time for a user in order to facilitate completion of the task.

2. The system of claim 1, a preferences tool for receiving user preference data with respect to time allocations, scheduling information, and how such information should be applied or exposed to other users or groups.

3. The system of claim 1, the time agent interacts with an electronic calendar or project scheduling system.

4. The system of claim 1, the time agent outputs adjustable patterns of appointments to the user at in order to coach or help the user meet desired goals.

5. The system of claim 4, the patterns of appointment include resource availability for completing a task and appear as part of a calendar or are directed to another output device including at least one of a cell phone, a display, a remote or local system, or an alternative user interface.

6. The system of claim 5, the patterns of appointment are dynamically adjusted by the scheduling component that alters or changes time allocations with respect to scheduling decisions made by the user.

7. The system of claim 1, the time agent generates reminders including when a soft or a hard deadline or task is to begin in the near future.

8. The system of claim 7, the reminder is directed to the user as feedback or as part of an electronic negotiation, wherein the user decides to complete the task or postpone the task to a later time.

9. The system of claim 8, if a postponement decision is made, the scheduling component re-allocates a user's schedule while fitting in the postponed task at a later time while readjusting or reprioritizing other tasks.

10. The system of claim 1, further comprising a component that at least one of defines a project with name, processes and analyzes preferences about time between completion and deadlines, estimates time required, chunks pattern preferences, provides defaults for scheduling, rescheduling, and pushing out lower-priority meetings and projects.

11. The system of claim 1, further comprising tools for tracking resources, managing adjustable policies for reminding, providing methods for reinstalling context, and providing policies for handling a given context, the policies including one or more properties of interrupability.

12. The system of claim 1, further comprising resource allocation tools provided at project definition and updated in-stream to allow for specification or confirmation of resources useful for projects.

13. The system of claim 12, the tools provide access to tasks when the tasks are scheduled to be attended to or called up by a user at another time.

14. The system of claim 12, the tools include automated sensing and compilation of documents, sites, and resources used during tasks.

15. The system of claim 1, further comprising an automatic scheduler that is made aware of task start and stop periods and employs confirmation or feedback to ensure a task was in focus.

16. The system of claim 15, the scheduler checks at the end or during respective time segments if questions were answered, or other procedures were performed during a segment or that resources touched are useful to the task.

17. The system of claim 16, the scheduler automatically determines resources at a later point in time.

18. The system of claim 1, the time agent selectively shares states of free and busy relating to a user with other users and groups.

19. The system of claim 1, further comprising one or more resource tracking tools that are harnessed for coalescing task-centric items and providing files, documents, or informational resources to users when they revisit a suspended task.

20. The system of claim 1, further comprising a component that allows third-party components to interact with the time management system.

21. The system of claim 20, further comprising a visual interface for allowing entry and design of a project, task, or activity to achieve desired goals.

22. The system of claim 20, further comprising a tools providing optimization of allocation of resources under constraints to manage activities.

23. The system of claim 22, the tools include linear and non-linear programming. techniques, and other resource allocation methods.

24. The system of claim 20, the third party tools include commercially available tools employed as plug-in modules.

25. The system of claim 1, further comprising a component to remind a user more in cases where a user is likely to forget to complete a task, or shown a deadline overrun.

26. The system of claim 25, further comprising statistical methods and models to learn about the task or deadline.

27. The system of claim 25, the statistical models are employed to determine where a user is having problems with respect to a task and to provide feedback at task set up time.

28. The system of claim 1, further comprising a processing component to recognize tasks automatically in electronic storage.

29. The system of claim 28, the processing component includes a Natural Language Processors and at least one text classifiers to facilitate determination and processing of tasks.

30. The system of claim 29, further comprising a component to enter tasks automatically or provide a feedback dialog to a user to determine or query the user if a task has been determined correctly.

31. A computer readable medium having computer readable instructions stored thereon for implementing the scheduling component and the time agent of claim 1.

32. A computerized time allocation system, comprising:
means for dynamically adjusting time within selected periods of a project; and
means for automatically scheduling the selected periods for a user in order to facilitate completion of the project.

33. A user interface for managing time, comprising:
one or more display objects that are laid out for a user to map activities for completion of a task; and
an automated scheduling component that determines time slots within a period of time, the time slots are automatically correlated to intermediate actions for achieving completion of the task.

34. The user interface of claim 33, further comprising inputs to mark an item for a reminder, create a project, set a deadline, set a time for completion, indicate whether the task has been completed, or to delay the task.

35. The user interface of claim 33, further comprising at least one of a project name, a deadline, an importance setting, a work schedule, an estimated amount of time, an interruptability setting, an auto-scheduling input, and a calendar to lay out time segments for a task or tasks at hand.

36. The user interface of claim 33, further comprising a component for receiving chunking preferences or determining a buffer time to complete before a deadline.

37. The user interface of claim 33, further comprising a component to distinguish between hard and soft deadlines.

38. The user interface of claim 33, further comprising a component for laying down a pattern of appointments on a calendar and allowing users to modify the pattern.

39. The user interface of claim 33, further comprising a component for reminding users in real time and having users confirm that a time period was focused on a project, skipped, or only partly used on the project.

40. The user interface of claim 33, further comprising a component for displaying hours remaining, allowing for re-estimation of time, rescheduling time if skipped or partially used time, or whether a user needs more or less allocated time if estimates about time required were too low or high.

41. The user interface of claim 33, further comprising a planner to display chunks of time for a task from a current time.

42. The user interface of claim 33, further comprising a status display to present project status, deadlines, and scheduled time remaining for at least one project.

43. The user interface of claim 33, further comprising a re-scheduling planner to view chunks of time remaining on a project.

44. The user interface of claim 33, further comprising a status display for a day's current tasks, the status display associated with an interrutability status for a respective task.

45. The user interface of claim 33, further comprising a component for defining an individual a group, or a dynamic group that can view a user's current status.

46. The user interface of claim 45, the user's current status includes at least one of busy and free.

47. The user interface of claim 33, further comprising a component to dynamically allocate and track resources for a user during the time slots.

48. A method for automatic time management and scheduling, comprising:
inputting one or more user preferences relating to scheduling options;
automatically laying out a plan to achieve a desired task based on the scheduling options;
sending reminders for upcoming tasks before reaching a hard deadline; and
automatically readjusting a schedule if a user cannot complete the tasks at issuance of the reminders.

49. The method of claim 48, further comprising selectively sharing the user's schedule with other groups or individuals based in part on a status associated with the user.
